# EUROPEAN PATENT APPLICATION

(11) **EP 2 950 311 A1**
(43) Date of publication of application: **02.12.2015**
(21) Application number: 14425065.1
(22) Date of filing: 30.05.2014
(51) Int. Cl.: G11B 27/34, H04N 5/232, G06F 3/048, H04W 4/04, H04N 7/18, H04N 21/40

(54) **Method, system and mobile terminal for acquiring information about road accidents**

(71) Applicant: Octocam S.r.l., 00173 Roma (RM) (IT)
(72) Inventor: Mungo, Andrea, 16031 Pieve Ligure (GE) (IT)
(74) Representative: Ferroni, Filippo

(57) **Abstract**

The present invention relates to a mobile terminal (2,2'), an event detection system (1), and a method for detecting information about at least one preset event, wherein said method comprises the steps of acquiring and/or storing a first video of images into the mobile terminal (2,2'), reproducing said first video and selecting, during its reproduction, an image corresponding to the preset event, generating a second video of images comprising at least a part of the first video and having a shorter length than the latter, wherein said second video starts at an instant prior and ends at an instant subsequent to that of said selected image, and transmitting said second video to processing means (10,10') configured for storing said second video.

## Description

The present invention relates to a mobile terminal, an event detection system, and a method for acquiring information about at least one preset event, preferably a road accident.

As is known, acquiring information before, during and immediately after a road accident can be of fundamental importance to be able to attribute responsibilities to the involved parties.

It is often difficult (if not impossible) and time-consuming to reconstruct the dynamics of a road accident by making surveys on the vehicles involved and/or on the asphalt of the road section where the accident occurred and/or by collecting depositions from the people involved and/or from any eyewitnesses.

United States patent US 2003/028298 A1 to MACKY et al. describes an apparatus that can be positioned in a vehicle, such as a car, a truck or a bus. This apparatus comprises a video camera, a memory, and a two-axis accelerometer, wherein the memory of said apparatus comprises a circular buffer that is continuously filled with a data stream generated by the video camera and by the accelerometer, and wherein said apparatus is configured for storing the contents of the circular buffer and the data stream generated by the video camera and by the accelerometer for a preset period of time (e.g. 20 seconds) into a permanent memory area every time the accelerometer detects at least one acceleration having an intensity associable with that which occurs during a road accident. In this manner, the contents of the circular buffer (relating to the period of time that precedes the instant when the accident has occurred) and the data stream acquired during the period of time including and following the instant of the accident are stored permanently, so that they can then be examined by the vehicle owner and/or by an insurance company and/or by competent authorities, such as the traffic police or the like.

During an accident, this apparatus permanently stores only the information acquired through the video camera, the accelerometer, and possibly a GPS receiver (if operational), so that the dynamics of a preset event, like an accident, cannot always be established in an objective manner. For example, in the event that an accident occurs between two or more vehicles, wherein the first vehicle (equipped with the above-described apparatus) is hit on its side at the centre of a crossing by a second vehicle incorrectly going through the crossing, it may be difficult to understand the dynamics of the accident only on the basis of the video shot by the camera and of the data acquired by the accelerometer positioned on the first vehicle, because the second vehicle might have been run into by a third vehicle, which pushed the second vehicle through the crossing against the first vehicle, thus causing the accident.

The present invention aims at solving these and other problems by providing an apparatus, an event detection system, and a method for acquiring information about road accidents, as set out in the appended claims.

The basic idea of the present invention is to increase the quantity of information about a preset event, such as an accident, by also collecting video information acquired by one or more mobile terminals that, at the time of said event, were located near the position of said event, thus allowing for a better reconstruction thereof.

Further advantageous features of the present invention will be set out in the appended claims.

These features as well as further advantages of the present invention will become more apparent from the following description of an embodiment thereof as shown in the annexed drawings, which are supplied by way of non-limiting example, wherein:
Fig. 1 is a schematic view of a system according to the invention;
Fig. 2 is a block diagram of an electronic computer included in the system of Fig. 1;
Fig. 3 is a front view of a mobile terminal comprised in the system of Fig. 1;
Fig. 4 is a block diagram that shows the parts comprised in the mobile terminal of Fig. 3;
Fig. 5 is a flow chart that shows the operation of a first embodiment of the mobile terminal of Fig. 4;
Fig. 6 is a flow chart that shows the operation of a second embodiment of the mobile terminal of Fig. 4;
Fig. 7 is a flow chart that shows the operation of a preferred embodiment of the method according to the invention.

Prior to describing in detail what is shown in the drawings, it is worth making clear that any reference to "an embodiment" in this description will indicate that a particular configuration, structure or feature described in regard to the embodiment is comprised in at least one embodiment. Therefore, the phrase "in an embodiment" and the like, which may be present in different parts of this description, will not necessarily be all related to the same embodiment. Furthermore, any particular configuration, structure or feature may be combined in one or more embodiments in any way deemed appropriate. The references below are therefore used only for simplicity's sake, and do not limit the protection scope or extension of the various embodiments.

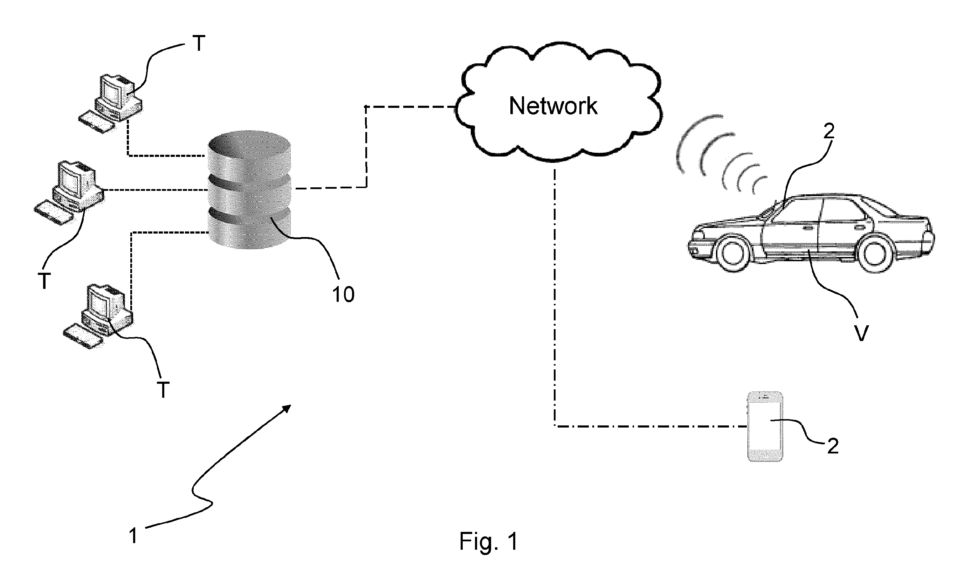

A system for detecting events (e.g. road accidents) according to the invention, designated as a whole by 1 in Fig. 1, comprises at least one electronic mobile terminal 2 suitable for being carried by a user, who can, by means of said mobile terminal 2, capture images relating to a preset event, such as a road accident involving a vehicle V.

This mobile terminal 2 is a smartphone, a tablet or the like, i.e. an apparatus that can capture images and retransmit them via suitable transmission means. Preferably, the mobile terminal 2 can also supply and transmit geolocation data and time data (e.g. date and time); such data are typically those available for satellite navigation, and comprise, among other things, the geographic coordinates of the position of the terminal 2 and the date and time when said terminal 2 was at said geographic coordinates.

The mobile terminal 2 can also transmit this information to processing means 10, via one or more communications networks schematically represented in Fig. 1 as a cloud, such as, for example, a cellular telephone network, the Internet and/or a dedicated network. Further details about the mobile terminal 2 will be provided below.

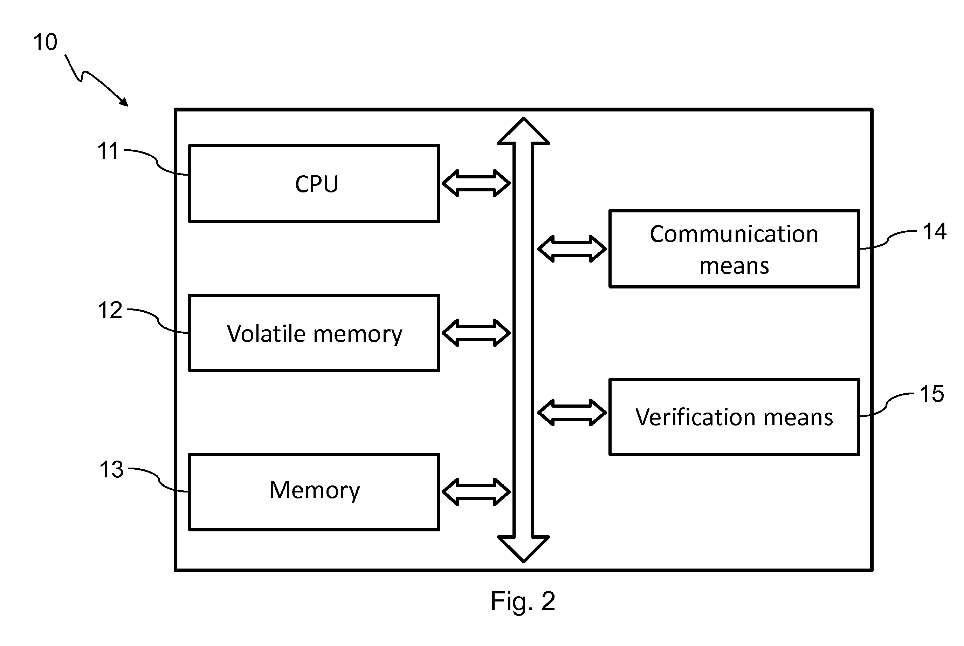

With reference to Fig. 2, the processing means 10 consist of a server apparatus, which may be more or less complex depending on the number of apparatuses 2 to be handled and on the complexity of the associated network.

The processing means 10 may be arranged remotely from the apparatuses, e.g. in a suitable data processing centre, and are advantageously accessible to authorized parties via a set of computer terminals T.

The data processing means 10 comprise, among others, the following logical blocks of functions:
- a central processing unit (CPU) 11;
- a volatile memory 12, e.g. RAM memory, for loading the instructions that the central processing unit 11 will have to execute;
- a mass memory 13, e.g. one or more mechanical or solid hard disks, for storing the instructions/data that must be transferred into the volatile memory 12 and then executed/processed by the CPU 11, as well as the information transmitted by the electronic terminal(s);
- communication means 14, e.g. an Ethernet and/or WiFi interface or the like, allowing the processing means 10 to gain access to the computer network and to receive, via said network, the information transmitted by the electronic apparatus(es).

This system may also comprise verification means which can verify the authenticity of the information acquired by the electronic terminal(s) and transmitted to the processing means 1.

In the embodiment of the system according to the invention shown in Fig. 2, the processing means 10 comprise verification means 15, which in turn comprise hardware and/or software (loaded into the memory 13) that can verify the authenticity of the information received from said apparatuses.

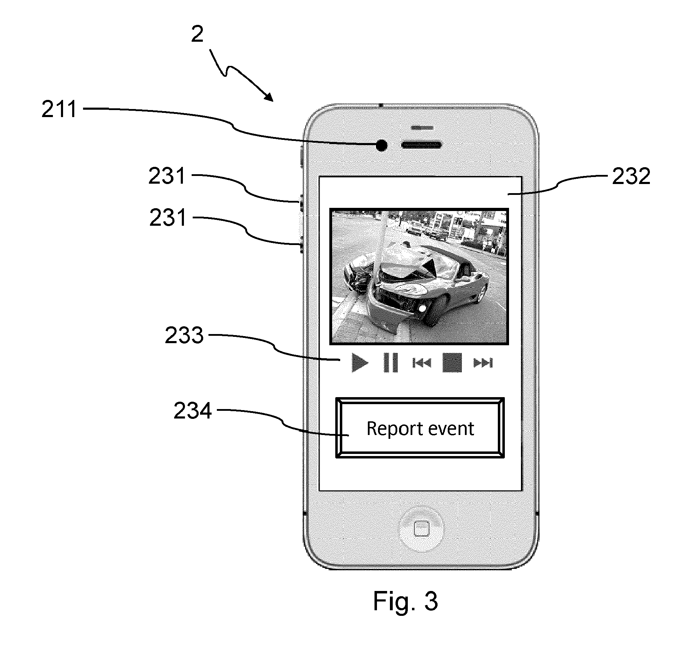

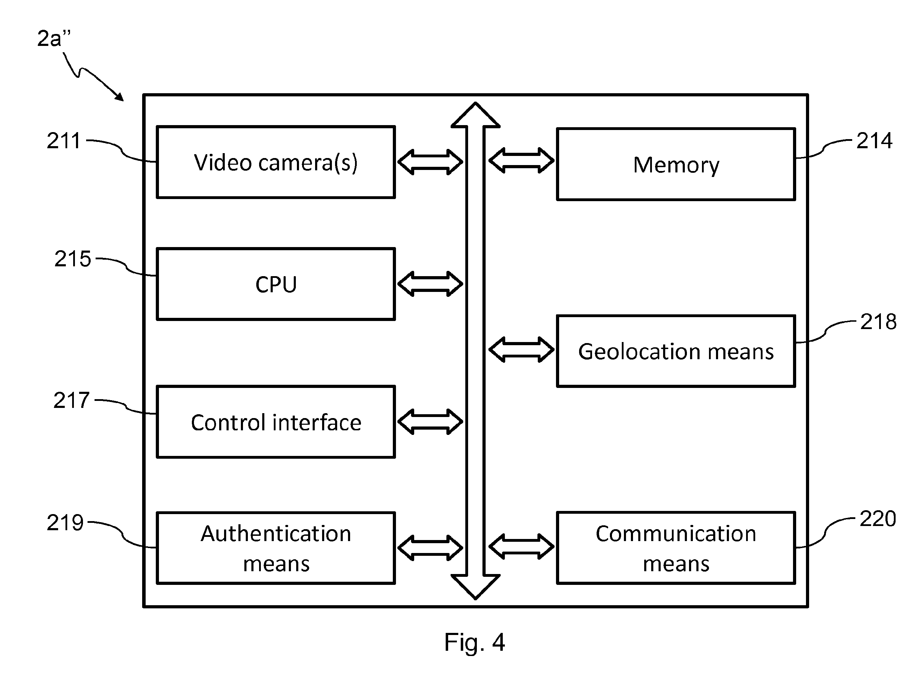

Also with reference to Figures 3 and 4, the mobile apparatus 2 consists of a mobile phone (of the type commonly referred to as smartphone) or another mobile telecommunication device (a so-called tablet or the like) suitable for data transmission (possibly in addition to voice communication); the mobile terminal 2 comprises the following parts:
- at least one data processing unit 215 (i.e. a microprocessor);
- communication means 220 allowing connection to the network and data transmission through it;
- a memory 214 containing at least instructions of a data acquisition program, the functions of which will be further explained below, wherein said memory 214 can be organized by using a FAT32, EXT3, NTFS filesystem or the like;
- a control interface 217, through which the user of said terminal 2 can interact with the latter, thus influencing the execution of the instructions by the data processing unit 215.

The data acquisition means of the mobile terminal 2 comprise at least one video camera 211, which can take video shots, and preferably also a microphone (not shown in the drawings), so that the shots taken by the video camera 211 are associated with external sounds and noise. The data acquisition means may advantageously also include geolocation means 218, such as, for example, a GPS/GLONASS/EGNOS receiver, which allow finding the position of the mobile terminal 2 and, consequently, of the preset event captured by said terminal 2 by means of the video camera 211.

The control interface 217 may include one or more pushbuttons 231 and/or a touchscreen 232, allowing the user of said terminal 2, as will be further explained below, to start/stop the recording of a video and to send said video to the processing means 10.

It should be noted that the above-mentioned elements are already present in some models of cellular telephones currently available on the market; it is therefore deemed unnecessary to provide further details in this regard, and reference should be made for brevity to the technical literature on this matter.

However, what is not known are the functions carried out by these elements, which can advantageously be controlled by a program for acquiring information about a preset event stored in the mobile terminal 2, which can be downloaded from the outside, e.g. via specialized services (like AppleStore® or GooglePlay®, accessible over the Internet), or can be installed by reading an external memory (e.g. a flash memory or a magnetic and/or optical medium) containing said program.

When it is executed by the processing unit 215 of the terminal 2, said program has said terminal 2 carry out the following steps:
a. storing at least a part of a video/audio data stream generated by the video camera 211, thus creating a first video of images, preferably compressed in the MPEG format and saved to a file into the memory 214, and, if available, at least a part of the data relating to the position of the mobile terminal 2, provided by the geolocation means 218 of said terminal 2; such positioning data can be associated with the file containing the first video, e.g. through the fields of the metadata present in the MPEG4 standard, or through the use of a stream synchronized with the video stream, into which said positioning data are serialized;
b. playing said first video upon the user's request, e.g. issued by actuating a button included in a playback control bar 233 displayed by said program on the touchscreen 232;
c. while the first video is being played, selecting upon the user's request, e.g. issued by activating a button-shaped control 234 displayed by said program on the touchscreen 232, a frame corresponding to a time instant of said first video when a preset event occurred or began. In other words, during this step the user can select an image corresponding to the preset event;
d. generating a second video of images comprising at least a part of the first video, wherein said second video is shorter than the first video, wherein the start time instant of said second video is prior to the time instant selected during the previous step (i.e. the time instant of the selected image), and wherein the end time instant of said second video is subsequent to said instant selected during the previous step (i.e. the time instant of the selected image).
e. transmitting said second video, through the network and the communication means 220, to the processing means 10, wherein said processing means 10 will then store said second video into the memory 13.

During step d., i.e. when the second video is generated, the terminal 2 may (optionally) also convert the video format in order to reduce the size of the resulting file, e.g. by converting the second video into the H.264/MPEG4 format with 640x480-pixel resolution. This feature is particularly interesting when the first video has been acquired in full HD format, i.e. with a resolution of 1920x1080 pixels, in that in such a case the size of said first video may easily reach some tens of megabytes.

By executing this program it is advantageously possible to increase the quantity of information accessible via the terminals T, thus making it easier for the authorized parties to reconstruct the preset event.

It must be pointed out that step a., during which the first video is stored, may also be carried out by using hardware and/or software components that are commonly present in mobile terminals 2 already available on the market. For this reason, step a. will not be described in further detail in the present description.

Moreover, by reducing the length of the video transmitted after having selected the time instant when the preset event occurred, it is advantageously possible to transmit a video to the processing means 10 more efficiently and at a lower cost. In fact, the quantity of data carried over the network will be smaller than that which would have to be transmitted if the length of the video had not been reduced.

Furthermore, if the terminal 2 comprises also authentication means 219 (e.g. an implementation of the SSL/TLS protocol and a digital certificate, a cryptographic chip, or the like) and uses them to transmit the second video (e.g. by affixing a digital signature through the SSL/TLS protocol), then the processing means 10 can verify the authenticity of the received data, so as to be able to store and/or process only correctly authenticated data; the authenticity verification thus carried out offers the advantage that it requires no particular algorithms for encrypting and decrypting the data acquired by the mobile apparatus 2 and received by the processing means 10, but uses (software and/or hardware) cryptographic components that are well known in the art.

The man skilled in the art may also use authentication means 219 other than those described above, without however departing from the teachings of the present invention.

It must be pointed out that during step d., when the second video is generated, the first embodiment of the invention determines the start and end time instants of said second video by using criteria which are preset in the terminal 2, i.e. based on a predefined value (e.g. ten seconds before and twenty seconds after the time instant selected by the user) or based on a maximum size value of the second video (e.g. twenty megabytes), so as to allow it to be transmitted via email/MMS or another communication protocol, or based on the terminal model or the quantity of available memory, etc.

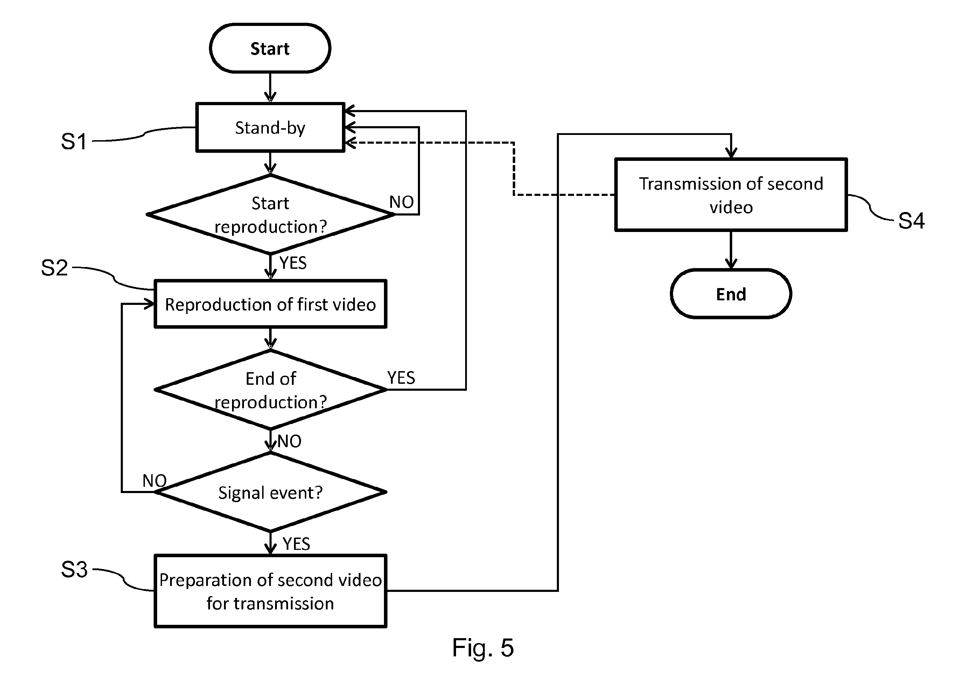

Also with reference to Fig. 5, one possible mode of operation of the terminal 2 according to the first embodiment of the invention is represented by means of a finite-state machine; said mode of operation can be implemented through software, e.g. the previously described program, which is then executed by the central processing unit 215 and/or by a programmable hardware component (e.g. a CPLD or a FPGA or the like) or a specially developed one. The finite-state machine comprises the following states:
- a stand-by state S1, wherein the terminal 2 carries out no reproduction function, but may preferably allow the user to select the file of the first video previously acquired;
- a reproduction state S2, wherein the terminal 2 plays the first video, i.e. it executes step b. of the previously described program;
- a preparation state S3, wherein the terminal 2 generates the second video by executing step d. of the previously described program;
- a transmission state S4, wherein the terminal 2 transmits the second video to the processing means 10, i.e. it executes step e. of the previously described program.

When the program is started (e.g. by selecting an icon on the touchscreen 232), the terminal 2 enters the state S1, where it stays until the user decides to start the reproduction of the first video (e.g. by actuating a button included in a playback control bar 233); when this happens, the machine enters the state S2. When during the reproduction of the first video the user of the terminal 2 selects a frame corresponding to the time instant when the preset event occurred or began, by executing step c. of the previously described program (e.g. by activating the button-shaped control 234 when the first video is showing a road accident), the terminal 2 will switch from the state S2 to the state S3, in which it will generate the second video; if, on the contrary, the user does not select any time instant, then the terminal 2 will return into the state S1; when the process of generating the video is complete, the terminal 2 will enter the state S4, wherein it will transmit the second video just generated to the processing means 10.

When the second video has been transmitted, the program executed by the apparatus 2 will end its operation by closing itself or, as highlighted by the dashed lines in Fig. 5, will enter again the state S1, ready for a new operating cycle.

Of course, the example described so far may be subject to many variations.

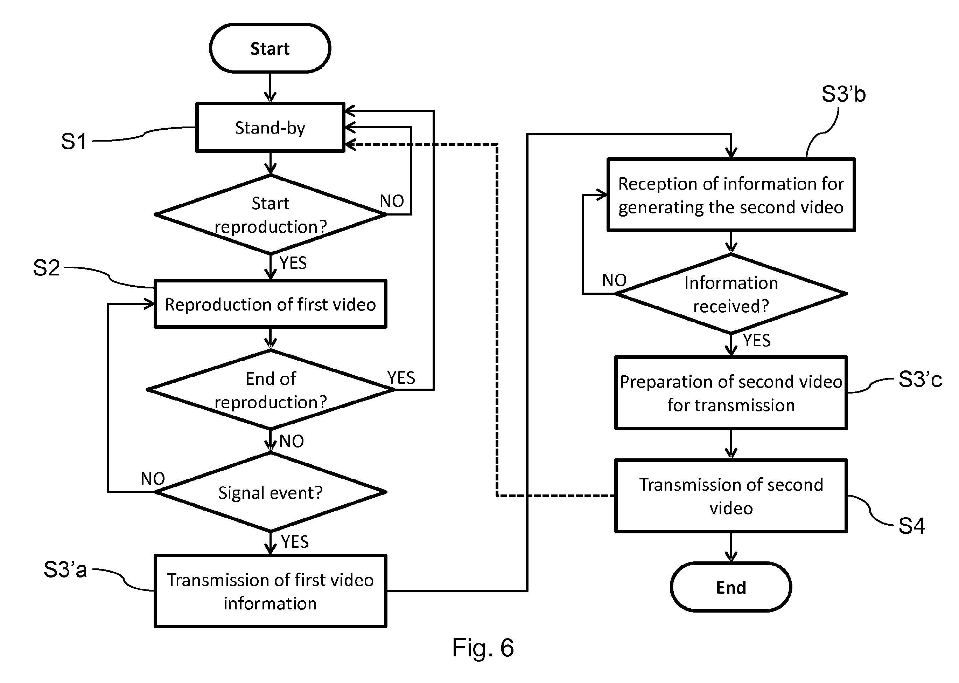

A first variant is shown in Fig. 6; for simplicity, the following description will only highlight those parts which make this and the next variants different from the above-described main embodiment; for the same reason, wherever possible the same reference numerals, with the addition of one or more apostrophes, will be used for indicating structurally or functionally equivalent elements.

This embodiment differs from the preceding one for the different strategy adopted in step d., i.e. the step wherein the second video is generated by starting from the first video. In the previous embodiment, in fact, the start and end time instants of said second video were chosen according to criteria set beforehand in the terminal 2; in this embodiment, instead, the start and end time instants of said second video are established by the processing means 10' prior to generating said second video and transmitting it to said processing means 10', which are similar to the processing means 10 employed in the previous embodiment of the invention. In this way it is advantageously possible to improve the efficiency of the system according to the invention, by acquiring and/or processing only information that concerns preset events meeting certain criteria that can be changed over time. The meaning of the term "criterion" will be clarified below.

This embodiment uses a mobile terminal 2' similar to the terminal 2 of the main embodiment, but configured for operating in a different manner. More particularly, one possible mode of operation of the terminal 2' is represented by means of a finite-state machine; said mode of operation can be implemented through software, e.g. the previously described program, which is then executed by the central processing unit 215 and/or by a programmable hardware component (e.g. a CPLD or a FPGA or the like) or a specially developed one. The finite-state machine differs from the one of the previous embodiment for the presence of the following states, replacing the previously described state S3:
- an information transmission state S3'a, wherein the terminal 2' transmits to the processing means 10' capture information relating to the first video, wherein said capture information may comprise the position of the terminal 2' at the time of the recording of the first video and/or its orientation and/or the time instant selected by the user during step c. of the previously described program;
- an information reception state S3'b, wherein the terminal 2' receives from the processing means 10' generation information that includes the start and end time instants that the second video shall have. It must be pointed out that, as will be further described below, the generation information may be generated by the processing means 10' based on the contents of the memory 13 of said means 10';
- a second-video preparation state S3'c, wherein the terminal 2' generates the second video by executing step d. of the previously described program and by using the generation information received from the processing means 10'.

As in the preceding embodiment, when the program is started (e.g. by selecting an icon on the touchscreen 232), the terminal 2' enters the state S1, where it stays until the user decides to start the reproduction of the first video (e.g. by actuating a button included in a playback control bar 233); when this happens, the machine enters the state S2. When during the reproduction of the first video the user of the terminal 2' selects a frame corresponding to the time instant when the preset event occurred or began, by executing step c. of the previously described program (e.g. by activating the button-shaped control 234 when the first video is showing a road accident), the terminal 2 will switch from the state S2 to the state S3'a, in which the terminal 2' will transmit to the processing means 10' capture information relating to the first video; if, on the contrary, the user does not select any time instant, then the terminal 2 will return into the state S1. When the terminal 2' enters the state S3'b, it configures itself for receiving from the processing means 10' the generation information that will allow generating the second video. When said generation information has been received, the terminal 2' will enter the state S3'c, in which it will generate the second video by executing step d. of the previously described program, also on the basis of the generation information received from the processing means 10'; once the video has been generated, the terminal 2' will enter the state S4, in which it will transmit the second video just generated to the processing means 10'.

The following will describe a use scenario which is typical of this second variant, in order to highlight the advantages of this embodiment.

When a preset event, like a road accident, occurs which involves the vehicle V, it is possible that the driver or one of the passengers of the vehicle V notify the competent authorities and/or the insurance company about the road accident, who will then take care of entering the appropriate information into the processing means 10'. Besides, it is also possible that the vehicle V is equipped with an automatic device for road accident detection (also known as "black box", not shown in the annexed drawings), configured for sending appropriate information to the processing means 10' when it is detected that said vehicle V has been involved in a road accident.

The processing means 10' store the received information into the memory 13, preferably in relational format, through the use of a DataBase Management System (DBMS). This information include at least the position of the accident and an identifier of the vehicle involved (e.g. the registration number, the vehicle identification number, or the like); said information may also comprise a maximum acceleration value detected by the automatic device during the accident, useful for estimating the damages caused by the accident.

When the user of the terminal 2' manages (perhaps by chance) to film a road accident by means of said terminal, or by using another device which then transfers the video into said terminal 2', the user can start the above-described program and, as said video is being played, select the time instant when the accident occurred (e.g. the moment when the collision took place). Afterwards, the terminal 2' will send the capture information relating to said first video (e.g. the position and/or the magnetic orientation it was in when the video was acquired, the time instant selected by the user, etc.) to the processing means 10', which will establish, based on criteria that may also take into account the contents of the memory 13, the start and end time instants of the second video. Finally, the second video will be generated on the basis of the time instants received from the processing means 10', and will then be transmitted to said means 10'.

The criteria used by the processing means 10' for establishing the start and end time instants can be based on one or more of the following pieces of information:
- distance between the position of the terminal 2' and that of the preset event, if already present in the memory 13 of the processing means 10', so as to be able to evaluate the pertinence of the video that the terminal 2' wants to transmit;
- time instant selected by the user of the terminal 2' and that of the preset event, if already present in the memory 13, so as to be able to evaluate the pertinence of the video that the terminal 2' wants to transmit;
- number of videos already transmitted by the terminals 2' and stored into the memory 13, so as to be able to avoid sending a large number of videos (let us think, for example, of a preset event that occurs during a public event like a concert, a football match or the like, when many people are filming with their own mobile terminals 2').
- position of the terminal 2', so as to vary the length of the video generated and transmitted by said terminal 2' according to its position (e.g. if the terminal is on a highway, it is likely that the video will need to be longer than when the terminal is in town, since a high-speed road accident usually has a longer evolution than a city accident).

It must be pointed out that by using one or more of these criteria it is also possible to inhibit video transmission from the terminals 2'. One possible way to inhibit video transmission is to have the processing means 10' transmit initial time instants that coincide with the final ones. In this manner, the terminals 2' that will receive said time instants will not generate any second video, because said second video will have a null length.

It must be pointed out that these criteria can be changed by an operator through one of the computer terminals T. The man skilled in the art may also use other criteria as an alternative or in combination with those proposed above, without however departing from the teachings of the present invention.

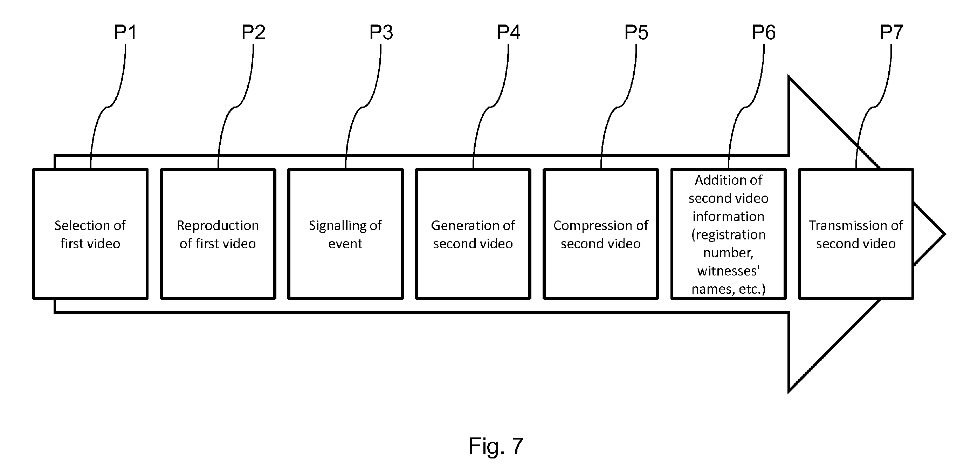

One preferred embodiment of the method according to the invention is illustrated in Fig. 7, which shows the steps carried out by a terminal 2,2' according to any one of the above-described embodiments.

In the preferred embodiment, the terminal 2,2' is configured for executing the following steps:
- a selection step P1, carried out when the terminal 2,2' is in the state S1, wherein the first video is selected, e.g. through a graphic interface operated by means of the control interface 217;
- a reproduction step P2, carried out when the terminal 2,2' is in the state S2, i.e. when it is playing the second video;
- a signalling step P3, carried out when the terminal 2,2' switches from the state S2 to the state S3 or S3'a, i.e. when the user selects the frame corresponding to the time instant at which the preset event occurred or began;
- a generation step P4, wherein the first video is "cut" according to one of the previously described modalities, thereby generating an uncompressed second video;
- a compression step P5, wherein the second video is preferably reduced in resolution, e.g. by changing its resolution to 640x480 pixels, and compressed by means of a compression algorithm (e.g. the H.264 algorithm), thereby generating a compressed second video;
- an information addition step P6, wherein additional information is associated with the compressed second video, which may comprise a registration number of one of the vehicles involved in an accident, a witness's name, or the like;
- a transmission step P7, wherein the terminal transmits the compressed second video and the additional information to the processing means 10,10'.

It can therefore be easily understood that the present invention is not limited to the explanatory examples described herein, but may be subject to many modifications, improvements or replacements of equivalent parts and elements without departing from the basic inventive idea, as set out in the following claims.

## Claims

1. A method for detecting information about at least one preset event by using a mobile terminal (2,2'), comprising the step of acquiring and/or storing a first video of images into the mobile terminal (2,2'),
**characterized in that**
it also comprises the steps of:
- reproducing said first video and selecting, during its reproduction, an image corresponding to the preset event,
- generating a second video of images comprising at least a part of the first video and having a shorter length than the latter, wherein said second video starts at a time instant prior and ends at a time instant subsequent to that of said image selected while reproducing the first video,
- transmitting said second video to processing means (10, 10') comprising a memory (13) and configured for storing said second video into said memory (13).

2. A method according to claim 1, wherein the start and end time instants of the second video are established on the basis of criteria set in the mobile terminal (2).

3. A method according to claim 1, wherein the start and end time instants of the second video are established on the basis of criteria set in the processing means (10').

4. A method according to claim 3, wherein the criteria take into account the contents of the memory (13).

5. A method according to claim 3 or 4, wherein the criteria take into account the position in which the terminal (2') is when it stores the first video.

6. A method according to any one of claims 3 to 5, wherein the criteria take into account the time instant of the image selected while reproducing the first video of images.

7. A method according to any one of claims 1 to 6, wherein the preset event is a road accident.

8. A computer program product which can be loaded into the memory of a computer, and which comprises portions of software code for executing the steps of the method according to any one of claims 1 to 7.

9. A mobile terminal (2,2'), comprising
- data acquisition means (211),
- a data processing unit (215),
- memory means (214) in communication with said processing unit,
- a control interface (217), through which a user of said terminal (2,2') can influence the execution of the instructions by the data processing unit (215),
- communication means (220) allowing the exchange of data, through a network, with processing means (10,10'),
wherein the data processing unit (215) is configured for storing into the memory means (214) a first video of images coming from the data acquisition means (211),
**characterized in that**
said data processing unit (215) is also configured for
- reproducing said first video of images and allowing the user to select through the control interface (217), during the reproduction of said video, an image in which a preset event occurs,
- generating a second video of images comprising at least a part of the first video and having a shorter length than the latter, wherein said second video starts at a time instant prior and ends at a time instant subsequent to that of said image selected while reproducing the first video,
- transmitting said second video of images to the processing means (10,10') through said communication means (220).

10. A terminal (2) according to claim 9, wherein the start and end time instants of the second video are calculated by the data processing unit (215) on the basis of criteria set in the memory means (214).

11. A terminal (2') according to claim 9, wherein the start and end time instants of the second video are received through the communication means (220).

12. A terminal (2') according to claim 11, comprising geolocation means (218) configured for generating position information when the first video is stored, wherein said position information is transmitted to said processing means (10') through the communication means (220), and wherein the start and end time instants of the second video are calculated by the processing means (10') on the basis of said position information.

13. A terminal (2') according to claim 11 or 12, wherein the time instant of the image selected by the user of said terminal (2') is transmitted to said processing means (10') through the communication means (220), and wherein the start and end time instants of the second video are calculated by the processing means (10') on the basis of said selected time instant.

14. A terminal (2,2') according to any one of claims 9 to 13, wherein the data acquisition means comprise a video camera (211).

15. An event detection system (1), comprising at least one terminal according to any one of claims 9 to 14, and processing means (10,10') in signal communication with said at least one terminal (2,2') and comprising a memory (13) in which at least a part of the data received from said at least one terminal (2,2') is stored.
